# EUROPEAN PATENT SPECIFICATION

(11) **EP 0 868 118 B1**
(45) Date of publication and mention of the grant of the patent: **08.03.2000**
(21) Application number: 96922033.4
(22) Date of filing: 26.06.1996
(51) Int. Cl.: A01F 29/00, A01K 5/00

(54) **SHARPENED BLADE FOR ROTATING SCREW FEEDERS OF CUTTING-MIXING MACHINES**
MESSERN FÜR DIE SCHRAUBENWINDE VON MISCH- UND SCHNEIDEMASCHINEN
LAME AIGUISEE POUR DES ALIMENTEURS A VIS ROTATIVES DE MACHINES SERVANT A MELANGER ET A HACHER

(30) Priority: 15.12.1995 IT VI950200
(43) Date of publication of application: 07.10.1998
(73) Proprietor: SEKO S.p.A., 35010 Curtarolo (Padova) (IT)
(72) Inventor: LOPPOLI, Giuseppe, I-35010 Grantorto (IT)
(74) Representative: Bonini, Ercole
(86) International application number: EP9602784
(87) International publication number: WO9722239

(56) References cited:
- WO-A-93/00799
- DE-A- 3 141 603
- DE-A- 3 410 338
- US-A- 5 395 286

## Description

The invention concerns an improved sharpened blade, particularly suitable to be applied to rotating screw feeders of cutting-mixing machines for fodder, grass silage and similar.

It is well-known that to put into practice the cutting and mixing action, the rotating screw feeders located on the cutting-mixing machines are equipped with cutting blades on the edge.

In a well-known realization, such blades, one of them is presented in fig, 1 stated by 100, are formed by a disk 101 having a basically quadrangular rounded off comers, as to present basically an octagonal shape with uneven sides. The blade's perimeter is sharpened according to a triangular, cross-section profile as to make it entirely sharp and able to carry out the necessary cutting action on the product in contact with it.

The blade is also equipped with a centre bore which has a polygonal section, preferably squared, in which it is coupled with the collar which is also square sectioned, presents in the under head of the fixing screw 300 to the rotating screw feeders 200. It has a circular hole which hosts the fixing screw which, through a tightened nut, holds the blade to the screw feeder.

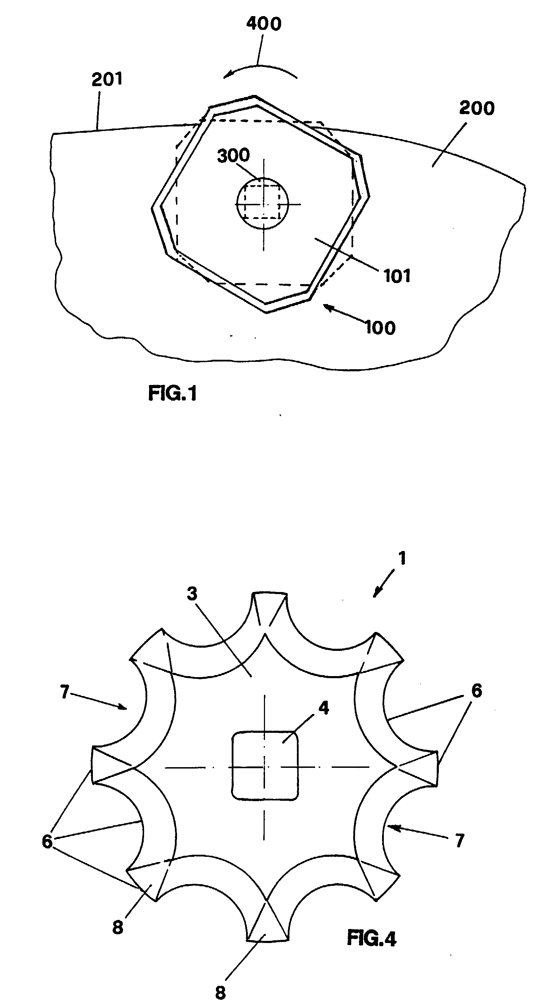

Also the blade, as can be observed in fig. 1, is protruding compared to the profile of the screw feeder for that part of its perimeter which carries out the cutting action on the product.

Blades belonging to the described known technique present the inconvenient that during the cutting action, because of the peripheral efforts, particularly strong or because of the loosening of the bolts that connect them to the screw feeder, can be trained in the rotation, for example according the anticlockwise direction 400, so to displace themselves according to the shaping shown by sketched line in fig. 1. It can be observed that in such a position the blade develops a practically void cutting action because its sharp edge is substantially covered by the profile 201 of the screw feeder 200 and so the blade does not come in contact with the material to be cut up.

Other blades having a circular shape are known: they offer the advantage to perform a constant cutting action which is independent from the fact that they can incidentally rotate on the screw feeder's clamping. In fact thanks to their circular form, the active part of their sharp perimeter is always protruding if compared to the screw feeder's profile and so they always develop a cutting action.

The inconvenience of such circular formed blades consists in the fact that the cutting action of the blades is not very aggressive as the impact with the product to be cut up is always done according to the curved convex profiles.

Cases are also known where the blades are equipped with peripheral teeth. Such blades offer the advantage to always perform a cutting effect even if they incidentally rotate on the screw feeder's clamping and thanks to the presence of these teeth, they increase the blade's aggressively on the product to be processed.

They do however present the inconvenience that the spaces between teeth are not sharp and so, the cutting action is only done by the teeth alone and this causes a reduction of the cutting efficiency only because part of the total perimeter of the blade takes part in cutting up action.

US-A-5 395 286 discloses a blade for rotating screw feeder the concave sharp profiles of which are not closed each other and are not equally and simmetrically distributed around the perimeter of the blade.

It is in order to eliminate such inconvenients, the realization of the blade for rotating screw feeders of cutting-mixing machines for fodder, grass silage and similar, has been made object of the present invention.

In particular, one of the purposes of the invention is to obtain a blade for rotating screw feeders which carries out on the product under processing, substantially, always the same cutting action, independently from the angle that this assumes whenever it is rotated on the clamping system which holds it to the screw feeder, assuming different configurations as to that of it's initial one.

Another purpose is that the aggressiveness of the cutting effect of the blade object of the invention, that it performs on the product, is practically independent from its angle according to which the blade is assembled to the screw feeder.

An additional purpose is that the blade object of the invention, should permit better cutting yields than other blades.

The mentioned purposes are achieved with the construction of a blade for rotating screw feeders of cutting-mixing machines for fodder, grass silage and similar, which according to the main claim, include a metal disk equipped at the periphery with a plurality of sharp profiles and at least with one bore which hosts means in order to hold the disk to the rotating screw feeder, and it is characterized in that such sharp profiles are shaped as a plurality of concavities closed each other, equally and symmetrically distributed on the perimeter of the disk a variable profile in order to realize on the product under processing a dragging and cutting aggressive action; said variable profile being cutting along all its perimetric length with a triangular cross-section, make it entirely sharp.

According to a preferred embodiment, the blade object of the invention is provided of a plurality of concave profiles. These concavities are distanced by the portion of the disk not affected by them and which have a convex profile. They are also arranged symmetrically to the perimeter of the disk.

According to a different embodiment, the profile of each concavity intersects the profile of the next one in order to define a sharp perimeter formed by concavities and cusps.

Both these solutions, according to a different way of constructing them, can foresee that each concavity, instead of a curved profile, has a profile formed by one or more consecutive segments. In addition also the periphery of the disk not involved by the concavities, can have a profile formed by one or more consecutive segments.

The above purpose can be described with a reference to the drawings represented in the enclosed tables, where:
- Fig. 1 shows a known blade assembled to the rotating screw feeder;
- Fig. 2 shows a plurality of blades object of the invention, represented according to a frontal anterior axonometric view and assembled to a rotating screw feeder;
- Fig. 3 shows the blades object of the invention represented in back axonometric view assembled to a rotating screw feeder;
- Fig. 4 shows the rotating blade object of the invention in a frontal anterior view;
- Fig. 5 shows the blade object of the invention in a cross-section and assembled to the rotating screw feeder by fixing means;
- Fig. 6 shows a different embodiment of the blade object of the invention;
- Fig. 7 shows another embodiment of the blade object of the invention.

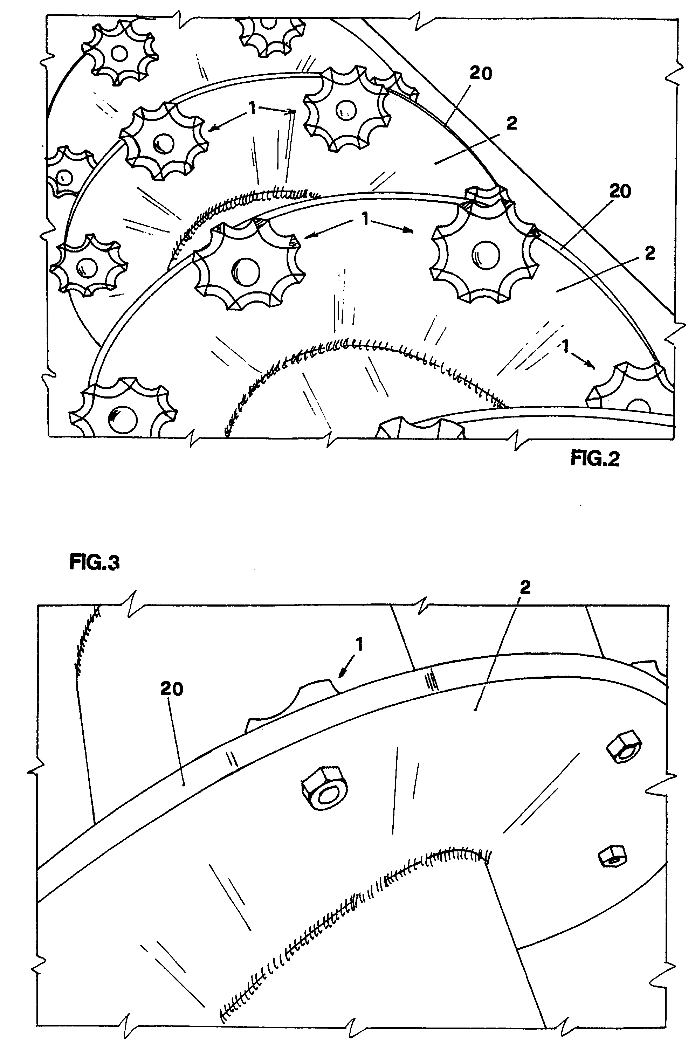

Fig. 2 and fig. 3 represent the blade object of the invention, stated with 1, which is assembled to a rotating screw feeder 2, belonging to a cutting-mixing wagon for fodder, grass silage and similar, not represented in the drawing.

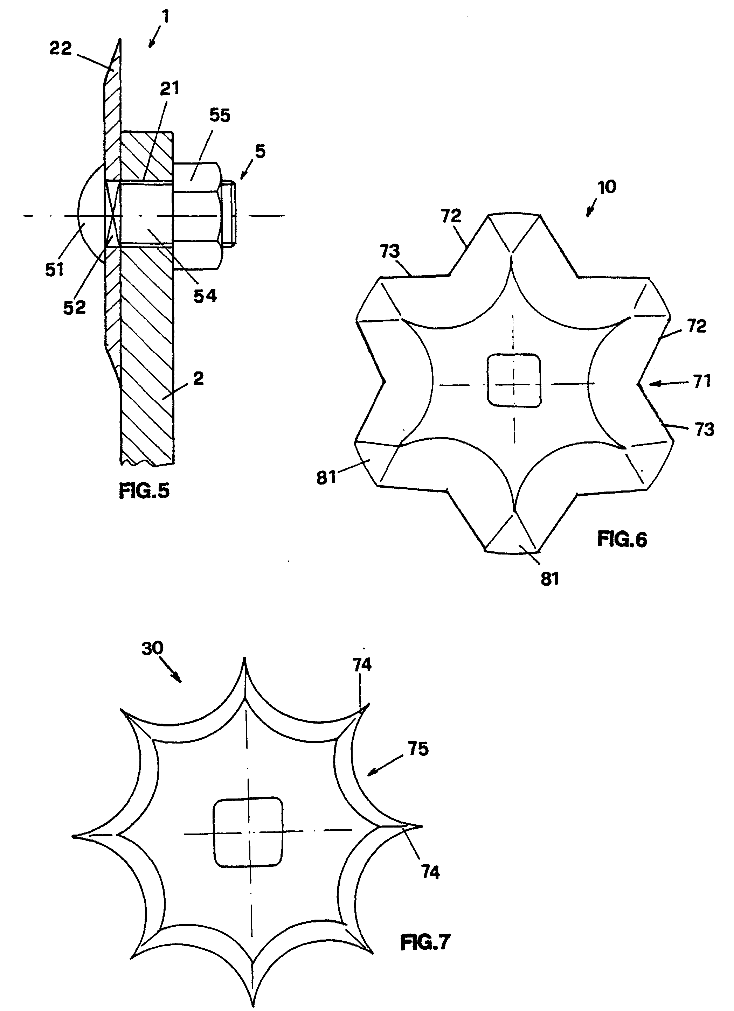

Fig. 4 shows in detail, the blade 1 object of the invention formed by a metal disk 3, with a bore 4 made in a central position, and of a plurality of sharp profiles 6 realized along its perimeter.

Fig. 5 shows the blade 1, assembled to the corresponding screw feeder 2, by a screw 5, which is formed by a head 51, a collar 52 with squared section realized under the head 51 and suitable for being assembled to the hole 4 of the disk 3, and by a thread 54, inserted in the hole 21 made in the screw feeder; the nut 55 screwed down, fix the blade 1 to the screw feeder 2.

With reference to the sharp profiles 6, as can be observed in the fig. 4 that they are realized with a plurality of concavities 7 along the perimeter of the disk 3, giving a variable profile which is later, sharpened according to a triangular shape 22 as can be seen in fig. 5 and suitable for making it entirely sharp and able to developing the necessary cutting action on the product in all the parts of its perimeter.

It can be observed in particular that in the executive solution represented in the fig. 4, the named concavities 7 are cavity with a curved profile and are arranged in a symmetrical way according to angular positions out of phase of constant quantities. In addition these concavities are spaced by peripheral parts 8 of the disk which are not being removed to make the concavities 7 and so have a convex profile.

During the spinning of the blade 1, the raw material under processing is held in the inner part of these concavities 7 and is cut up by the cutting action of the sharp profile 6 present along the entirely perimeter of the blade, eventually in combination with the mechanical reaction made by counterblades, not represented in the drawing and located the internal cutting-mixing wagon which is not represented too. It can be understood that when the material enters in contact with the sharp profile of the concavities 7, besides to endure the dragging action, an aggressive action is done due to the fact that the product enter in contact with the sharp convex profile that in this way increase the impact's angle and makes more aggressive the cutting action.

In addition, the blade 1 realizes a cutting action which is mainly constant and not affected by the position that it assumes in relation to the screw feeder to which it is fixed. It can be observed in fact in drawings 2 and 3 that whichever is the angle position of the blade compared to the screw feeder, it always presents the sharp profile protruding from the profile 20 of the screw feeder 2 and so its cutting action is substantially independent from eventually rotating shiftings around the screw which realizes the connection with the screw feeder, and may occur during the process.

Also, being all the disk's profile involved by the sharpening and so being sharp, the blade 1 realises cutting outputs even superior if compared to known blades.

A different ambodiment of the blade object of the invention, stated with 10, is represented in fig. 6 wherein it can be observed that each concavity 71 presents a profile formed by two consecutive segments 72 and 73 so that the sharp cutting profile of the blade 10 has a multiple form. Eventually, even the areas 81 of the blade not interested in the execution of the concavities 71, instead to presents a curved profile, can present a profile formed by one or more segments.

Another embodiment of the disk object of the invention, stated with 30, is represented in fig. 7 wherein it can be observed that each concavity 72 presents a curved profile and intersect the adjacent concavity determining in this way on the blade's profile a plurality of cusps 74.

It is understood that, the blade object of the invention even in the different embodiments here described, reach the prefixed goals to develop a cutting action independently from the fact that during the manufacturing, it changes its position compared to the initial fixed position. Besides, combining among them the concavity's number which are obtained in the disk, their form, their position and their profile, it is possible to obtain blades that realize less or more aggressive cutting effects with better cutting performance if compared to those known.

During the realization step the blade object of the invention will, however, be manufactured according to other forms, different from those described. Also, the invented blade could be realized whatever dimensions.

It is however clear that all the mentioned variations and all the others possible within the scope of the claims are to be considered protected by the present invention.

## Claims

1. Blade (1; 10; 30) for rotating screw feeders (2) of cutting-mixing machines for fodder, grass silage and similar, comprising a metal disk (3) equipped with a plurality of sharp profiles (6) and with at least one hole (4) which hosts clamping means (5) between said disk (4) and said rotating screw feeder (2) **characterised in that** said sharp profiles (6) are shaped as a plurality of concavities being closed to each other (7; 71; 75) and being further equally and symmetrically distributed on the perimeter of said disk (3) in order to realize on the product under processing a dragging and cutting aggressive action, the profile being sharpened for its perimetric length according to a triangular cross-section (22) as to make it entirely sharp.

2. Blade (1) for rotating screw feeders (2) of cutting-mixing machines according to the claim 1 ) **characterised in that** said concavities (7) have a curved profile.

3. Blade (10) for rotating screw feeders (2) of cutting-mixing machines according to the claim 1) **characterised in that** each of the concavities (71) presents a profile formed by at least one segment (72; 73).

4. Blade (10) for rotating screw feeders (2) of cutting-mixing machines according to the claim (3) **characterised in that** the profile of each of the said concavities (71) is formed by two segments (72; 73) convergent among them.

5. Blade (1; 10) for rotating screw feeders (2) of cutting-mixing machines according to the claim 1) **characterised in that** said concavities (7; 71) are spaced to each other and present a suitable width to define on the disk's edge (3) areas (8) not machined.

6. Blade (30) for rotating screw feeders (2) of cutting-mixing machines, according to the claim 1) **characterised in that** said concavities (75) intersect themselves reciprocally defining a plurality of cusps (74).

## Patentansprüche

1. Messer (1, 10, 30) für drehende Schneckenförderer (2) von Schneid- und Mischmaschinen für Futter, Grassilage, und ähnlichen, folgendes umfassend: eine Metallscheibe (3) mit einer Vielzahl scharfer Profile (6) und mit wenigstens einem Loch (4), das Klemmittel (5) zwischen der Scheibe (4) und dem drehenden Schneckenförderer (2) aufnimmt, **dadurch gekennzeichnet, daß** die scharfen Profile (6) als eine Vielzahl nahe aneinander liegender Aushöhlungen (7, 71, 75) geformt sind und des weiteren gleichmäßig und symmetrisch am Umfang der Scheibe (3) verteilt sind, um am zu verarbeitenden Produkt eine aggressive Reiß- und Schneidwirkung auszuüben, wobei das Profil über seine Außenrandlänge mit einem dreieckigen Querschnitt (22) geschliffen ist, um es zur Gänze zu schärfen.

2. Messer (1) für drehende Schneckenförderer (2) von Schneid- und Mischmaschinen gemäß Patentanspruch 1), **dadurch gekennzeichnet, daß** jede der Aushöhlungen (7) ein gebogenes Profil aufweist.

3. Messer (10) für drehende Schneckenförderer (2) von Schneid- und Mischmaschinen gemäß Patentanspruch 1), **dadurch gekennzeichnet, daß** jede der Aushöhlungen (71) ein durch wenigstens ein Segment (72, 73) geformtes Profil aufweist.

4. Messer (10) für drehende Schneckenförderer (2) von Schneid- und Mischmaschinen gemäß Patentanspruch 3), **dadurch gekennzeichnet, daß** das Profil jeder der Aushöhlungen (71) durch zwei zueinander konvergierende Segmente (72, 73) geformt ist.

5. Messer (1, 10) für drehende Schneckenförderer (2) von Schneid- und Mischmaschinen gemäß Patentanspruch 1), **dadurch gekennzeichnet, daß** diese Aushöhlungen (7, 71) ausreichend weit voneinander entfernt sind, um unbearbeitete Bereiche (8) am Scheibenrand (3) zu definieren.

6. Messer (30) für drehende Schneckenförderer (2) von Schneid- und Mischmaschinen gemäß Patentanspruch 1), **dadurch gekennzeichnet, daß** diese Aushöhlungen (75) sich selbst gegenseitig schneiden und so eine Vielzahl von Kurvenspitzen definieren.

## Revendications

1. Un couteau (1 ; 10 ; 30) à profil perfectionné pour vis transporteuses pivotantes (2) de machines coupeuses-mélangeuses pour fourrage et herbe ensilés et d'autres produits similaires, comprenant un disque métallique (3) équipé d'une pluralité de profils aigus (6) et d'au moins un trou (4) qui loge des moyens de fermeture (5) entre ledit disque (4) et ladite vis transporteuse pivotante (2) **caractérisé en ce que** lesdits profils aigus (6) ont la forme d'une pluralité de concavités étant fermées entre elles (7 ; 71 ; 75) et étant en outre distribuées de manière égale et symétrique sur le périmètre dudit disque (3) afin de réaliser sur le produit en cours d'usinage une action agressive d'entraînement et de coupage, le profil étant affilé pour sa longueur périmétrique selon une section croisée triangulaire (22) pour le rendre totalement aigu.

2. Un couteau (1) à profil perfectionné pour vis transporteuses pivotantes (2) de machines coupeuses-mélangeuses selon la revendication 1) **caractérisé en ce que** lesdites concavités (7) ont un profil courbé.

3. Un couteau (10) à profil perfectionné pour vis transporteuses pivotantes (2) de machines coupeuses-mélangeuses selon la revendication 1) **caractérisé en ce que** chaque concavité (71) présente un profil formé d'au moins un segment (72 ; 73).

4. Un couteau (10) à profil perfectionné pour vis transporteuses pivotantes (2) de machines coupeuses-mélangeuses selon la revendication 3) **caractérisé en ce que** le profil de chaque concavité (71) est formé de deux segments (72 ; 73) convergeant entre eux.

5. Un couteau (1 ; 10) à profil perfectionné pour vis transporteuses pivotantes (2) de machines coupeuses-mélangeuses selon la revendication 1) **caractérisé en ce que** lesdites concavités (7 ; 71) sont espacées entre elles et présentent une distance indiquée pour définir des zones (8) non usinées sur le bord du disque (3).

6. Un couteau (30) à profil perfectionné pour vis transporteuses pivotantes (2) de machines coupeuses-mélangeuses selon la revendication 1) **caractérisé en ce que** lesdites concavités (75) s'entrecroisent réciproquement pour définir une pluralité de pointes (74).
